# EUROPEAN PATENT SPECIFICATION

(11) **EP 2 539 501 B1**
(45) Date of publication and mention of the grant of the patent: **31.07.2019**
(21) Application number: 11747719.0
(22) Date of filing: 24.02.2011
(51) Int. Cl.: D06F 37/02, D06F 58/02, D06F 58/04, D06F 58/06

(54) **LAUNDRY TREATMENT MACHINE**
WÄSCHEBEHANDLUNGSMASCHINE
MACHINE DE TRAITEMENT DE BUANDERIE

(30) Priority: 24.02.2010 KR 20100016787
(43) Date of publication of application: 02.01.2013
(73) Proprietor: LG Electronics Inc., Seoul 150-721 (KR)
(72) Inventor: HONG, Sog Kie, Seoul 153-023 (KR); KIM, Jong Seok, Seoul 153-023 (KR); KIM, Sung Min, Seoul 153-023 (KR); PARK, Dae Yun, Seoul 153-023 (KR)
(74) Representative: Vossius & Partner Patentanwälte Rechtsanwälte mbB
(86) International application number: PCT/KR2011/001295
(87) International publication number: WO 2011/105829

(56) References cited:
- EP-A1- 0 112 138
- WO-A1-2006/120644
- WO-A1-2006/120644
- WO-A2-03/012185
- DE-A1- 4 105 686
- FR-A- 1 275 057
- FR-A- 1 287 505
- JP-A- 59 225 100
- JP-A- 59 225 100
- US-A- 3 143 501
- US-A- 3 932 947
- US-A- 3 932 947
- US-A- 4 007 546
- US-A- 4 007 546

## Description

### Technical Field

The present disclosure is directed to a laundry treatment apparatus having a larger drum than conventional devices.

### Background Art

Laundry treatment apparatuses generally refer to apparatuses for performing treatment, such as washing, drying, or wrinkle removing, on clothing or beddings (hereinafter, simply referred to as "laundry") as used in homes or laundry shops. Laundry treatment apparatuses include washers, dryers and washer/dryer combination. The amount of laundry that may be treated by the laundry treatment apparatuses may be limited based on the size of the drum. A laundry treatment apparatus with the features of the preamble of claim 1 is known from JP 59 225100 A.

### Brief Description of Drawings

The embodiments will be described in detail with reference to the following drawings in which like reference numerals refer to like elements wherein:
Fig. 1 is a perspective view illustrating a laundry treatment apparatus according to an embodiment of the present disclosure.
Fig. 2 is a perspective view illustrating a drum of a laundry treatment apparatus according to an embodiment of the present disclosure.
Fig. 3 is a view illustrating a shape of a drum of a laundry treatment apparatus according to an embodiment of the present disclosure.
Fig. 4 is a view illustrating a radius of curvature of a drum of a laundry treatment apparatus according to an embodiment of the present disclosure.

### Best Mode for Carrying out the Invention

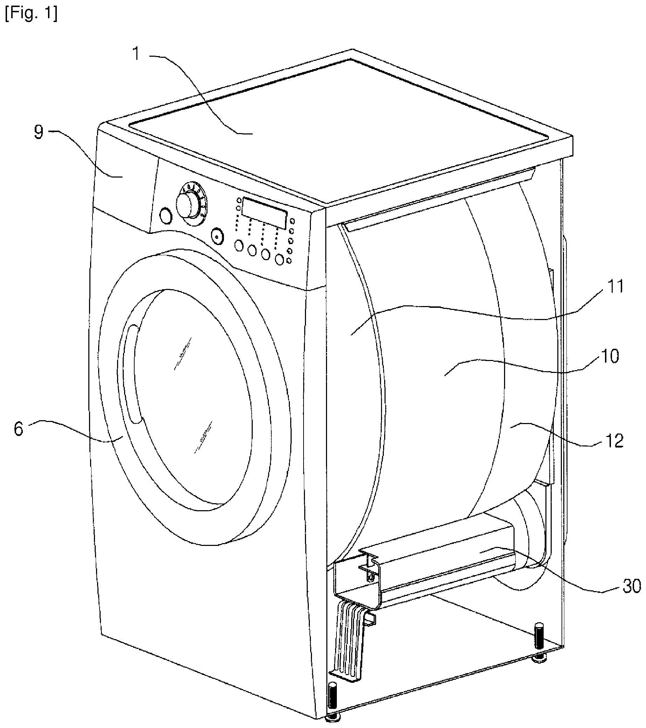

Fig. 1 is a perspective view illustrating a laundry treatment apparatus according to an embodiment of the present disclosure. The laundry treatment apparatus includes a cabinet 1, a drum 10, and a heater 30. The cabinet 1 forms the appearance. The drum 10 is rotatably positioned in the cabinet 1. The drum 10 receives laundry. The heater 30 heats air flowing into the drum 10. As shown therein, the cabinet has a prescribed width, height and depth.

The cabinet 1 has an opening for entrance or exit of laundry to/from the drum 10 at a front surface thereof. A door 6 is rotatably connected to the front surface of the cabinet 1 to open and close the opening. The front surface of the cabinet 1 includes a control panel 9 that allows a user to enter operation commands and show operational states to the user.

A front support 11 is provided behind the front surface of the cabinet 1 to support a front end circumferential portion of the drum 10. The front supporter 11 supports the drum 10 so that the drum 10 may rotate.

A rear supporter 12 is provided in front of a rear surface of the cabinet 1 to support a rear end circumferential portion of the drum 10. The rear supporter 12 supports the drum 10 so that the drum 10 may rotate. According to an embodiment, the rear supporter 12 may be opened or include an opening so that air heated by the heater 30 may flow into the drum 10.

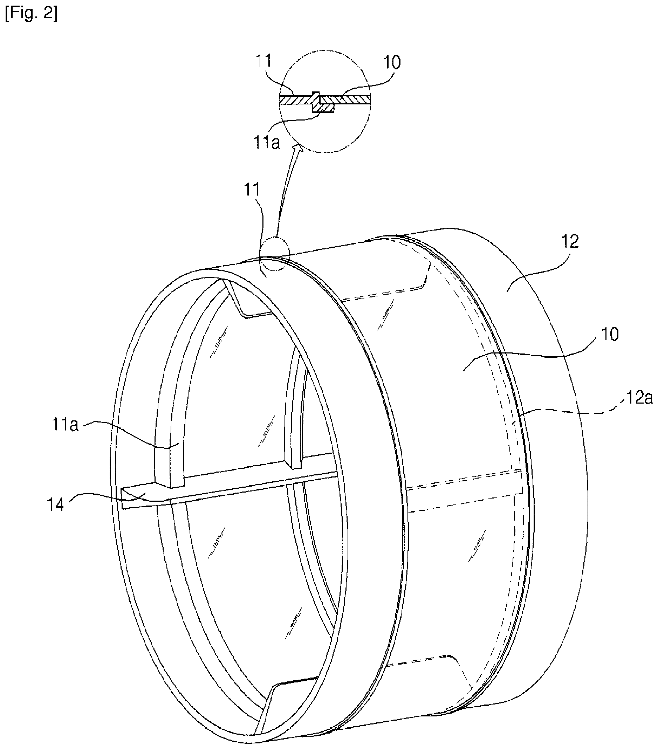

Fig. 2 is a perspective view illustrating a drum of a laundry treatment apparatus according to an embodiment of the present disclosure. The drum 10 is opened in a front and rear direction so that the drum 10 receives laundry and so that air may pass in the drum in the front and rear direction. A cross section of the drum 10 is simple closed curve where first distance between a rotational axis of the drum 10 and a first location on an inner surface of the drum 10 is different from second distance between the rotational axis of the drum 10 and a second location on the inner surface of the drum 10. The cross section of the drum 10 is orthogonal to a rotational axis of the drum 10. The drum 10 includes lifters 14 on an inner surface thereof so that laundry received in the drum 10 may be lifted and dropped. According to an embodiment, the lifters 14 may be slidably connected to the front supporter 11 and the rear supporter 12 to be rotated with the drum 10.

The front and rear end circumferential portions of the drum 10 are supported by the front supporter 11 and the rear supporter 12, respectively. According to an embodiment, front and rear ends of the drum 10 may be slidingly connected to the front supporter 11 and the rear supporter 12, respectively, to allow the drum 10 to be rotated.

The front supporter 11 and the rear supporter 12, respectively, include a front bending portion 11a and a rear bending portion 12a that are bent inwardly of the drum 10 and brought in contact with circumferential portions of the drum 10 to support the drum 10.

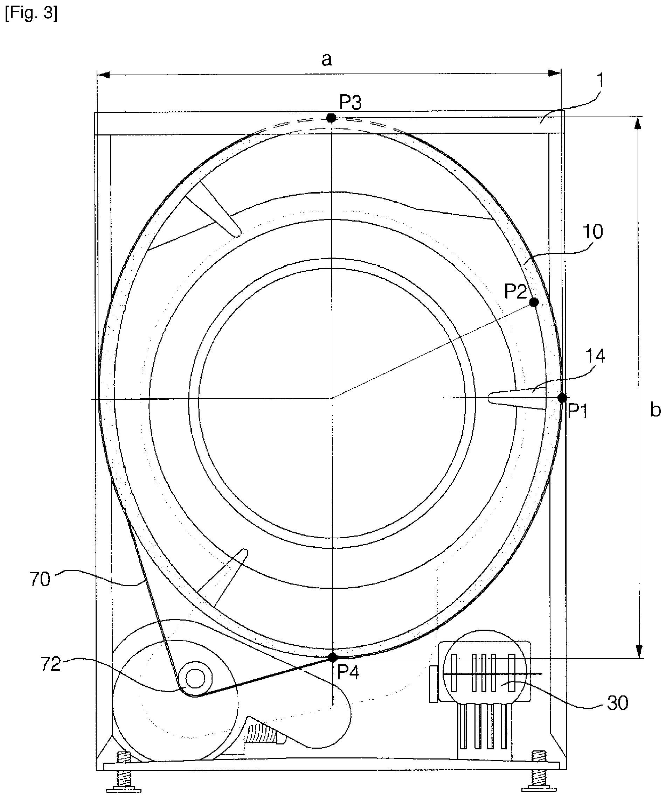

Fig. 3 is a view illustrating a shape of a drum of a laundry treatment apparatus according to an embodiment of the present disclosure. While the drum 10 is rotated, a cross section of the drum 10 is a simple closed curve in which a distance between a rotational axis of the drum 10 and a point on a circumference of the drum changes along the circumference, e.g., the radius of curvature changes along the circumference of the drum. According to an embodiment, the drum 10 may be formed of a resilient or bendable material, metallic material, or polymer material so that the drum 10 may rotate with the distance uneven.

According to this embodiment, a maximum distance between antipodal points of the simple closed curve (hereinafter, referred to as "maximum distance b") may not be in excess of 1.2 times of a minimum distance between antipodal points of the simple closed curve (hereinafter, referred to as "maximum distance a"). When the maximum distance b is more than 1.2 times of the minimum distance a, it may be difficult for the cross section of the drum 10 to maintain the simple closed curve during rotation.

According to an embodiment, upon rotation of the drum 10, the maximum distance b may be determined depending on a shape of the cabinet 1. According to the present embodiment, the cabinet 1 is configured so that a vertical length is longer than a horizontal length. As a consequence, when the drum 10 is rotated, the maximum distance b is formed in a vertical direction, and the minimum distance a is formed in a horizontal direction. For example, the shape of the simple close curve is a vertical elliptical if the height is larger than the width of the cabinet, whereas the shape of the simple close curve is a horizontal elliptical if the width is larger than the height of the cabinet.

According to another embodiment, at least a portion or some portions of the drum having a simple closed curve shape, e.g., elliptical, may be straight, instead of having a curvature. In other words, the straight portions of the drum have zero curvature, and hence, these portions have an infinite or undefined radius of curvature. According to this embodiment, a straight section or straight portions may not exceed 10% of the whole simple closed curve or the outer circumference of the drum.

According to an embodiment, the drum 10 may be rotated by a driving unit that includes a belt 70 and a motor 72. The belt 70 transfers a rotational force of the motor 72 to the drum 10 to rotate the drum 10 based on contact with an outer circumferential surface of the drum 10 and not to slide on the outer circumferential surface. The belt 70 may be formed of a metal or polymer material that is resilient and easily bendable. According to an embodiment, protrusion and depressions may be formed on the belt 70 and the outer circumferential surface of the drum 10 so that the belt 70 does not slide on the outer circumferential surface of the drum 10.

According to an embodiment, a cross section of a portion of the drum 10 that is supported by the front supporter 11 may be identical to a cross section of a portion of the drum 10 that is supported by the rear supporter 12 so that the drum 10 may be rotated with a cross section of a simple closed curve where a distance between the rotational axis and the simple closed curve is uneven.

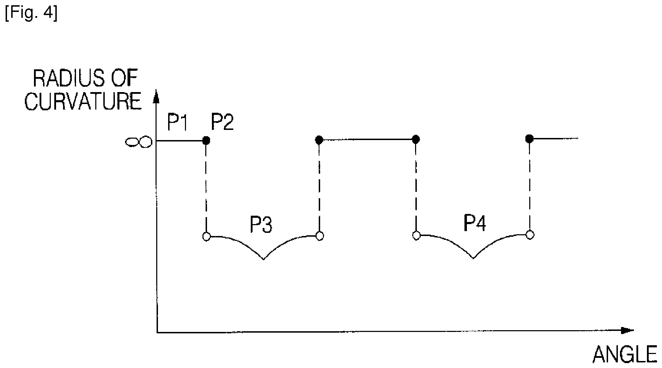

Fig. 4 is a view illustrating a radius of curvature of a drum of a laundry treatment apparatus according to another embodiment of the present disclosure. For explaining the shape of drum in this embodiment, Points P1, P2, P3, and P4 of Figure 3 are used as an example to explain this embodiment. The points P1, P2, P3 and P4 are illustrative points on a circumference of the drum and the Figure 4 embodiment does not have the shape shown in Figure 3.

As shown in the radius of curvature graph of Figure 4, the radius of curvature is infinite at points P1 and P2-that is, points P1 and P2 belong to straight line sections of the simple closed curve. Also, straight line sections occur between points P3 and P4 and between points P4 and P1. As shown in Fig. 4, with respect to point P3, the radius of curvature gradually decreases before point P3 and gradually increases after point P3. This is true for point P4. For example, the radius of curvature becomes the largest at points P3 and P4. As described above, the straight line sections may not exceed 10% of the whole simple closed curve.

According to an embodiment, upon rotation of the drum 10, the radius of curvature becomes infinite at left and right sides of the simple closed curve-for example, straight line sections occur at the left and right sides. The radius of curvature becomes the minimum at upper and lower ends of the simple closed curve.

According to the embodiments of the present disclosure, the drum 10 of the laundry treatment apparatus forms a cross section which is a simple closed curve in which a distance between the simple closed curve and a rotational axis of the drum 10 is uneven when the drum 10 is rotated. As a consequence, more laundry may be received in the drum 10.

As can be appreciated based on the present disclosure, the drum disclosed herein is larger than the drum of a conventional laundry apparatus given that both have the same cabinet dimensions. In the conventional laundry apparatus, the drum is circular whereas, the shape of the drum disclosed herein may be elliptical and may or may not include straight portions. Further, the drum may be any shape so long as the straight portion or portions may not exceed 10% of the shape of the drum generally having a simple closed curve shape.

Any reference in this specification to "one embodiment," "an embodiment," "example embodiment," etc., means that a particular feature, structure, or characteristic described in connection with the embodiment is included in at least one embodiment of this disclosure. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. A laundry treatment apparatus comprising:
a cabinet (1) having a prescribed shape;
a supporter (11, 12) provided in the cabinet;
a drum (10) configured to rotate and provided on the supporter, a circumferential portion of the drum slidably connected to the supporter, a cross section of the drum being a simple closed curve where first distance between a rotational axis of the drum and a first location on an inner surface of the drum is different from second distance between the rotational axis of the drum and a second location on the inner surface of the drum;
a lifter (14) provided on an inner surface of the drum for lifting a laundry received in the drum; and
a motor (72) to rotate the drum,
wherein the supporter includes a front supporter (11) that supports a front end circumferential portion of the drum (10) and a rear supporter (12) that supports a rear end circumferential portion of the drum (10),
wherein the supporter (11, 12) includes a bending portion (11a, 12a) that is bent inwardly of the drum and brought into contact with a circumferential portion of the drum to support the drum, and
**characterized in that** the lifter (14) is slidably connected to the front supporter (11) and the rear supporter (12) to be rotated with the drum (10).

2. The laundry treatment apparatus of claim 1, wherein a maximum distance between antipodal points of the simple closed curve does not exceed 1.2 times of a minimum distance between antipodal points of the simple closed curve when the drum is rotated.

3. The laundry treatment apparatus of claim 1, wherein at least a portion of drum includes at least one straight section.

4. The laundry treatment apparatus of claim 3, wherein at least one straight section does not exceed 10% of the whole simple closed curve when the drum is rotated.

5. The laundry treatment apparatus of claim 1, wherein a radius of curvature is infinite at left and right sides of the simple closed curve and becomes the minimum at upper and lower ends of the simple closed curve when the drum is rotated.

6. The laundry treatment apparatus of claim 5, wherein a portion of the simple closed curve where a radius of curvature is infinite does not exceed 10% of the whole simple closed curve when the drum is rotated.

7. The laundry treatment apparatus of claim 1, wherein the drum is rotated so that the simple closed curve has a maximum distance from the rotational axis according to a shape of the cabinet.

8. The laundry treatment apparatus of claim 7, wherein the drum is rotated so that a vertical length of the drum is more than a horizontal length of the drum.

## Patentansprüche

1. Wäschebehandlungsvorrichtung mit:
einem Gehäuse (1), das eine vorgeschriebene Form aufweist;
einer Halterung (11, 12), die im Gehäuse vorgesehen ist;
einer Trommel (10), die konfiguriert ist, sich zu drehen und die an der Halterung vorgesehen ist, wobei ein Umfangsabschnitt der Trommel verschiebbar mit der Halterung verbunden ist, wobei ein Querschnitt der Trommel eine einfache geschlossene Kurve ist, wobei sich ein erster Abstand zwischen einer Drehachse der Trommel und einer ersten Stelle an einer Innenfläche der Trommel von einem zweiten Abstand zwischen der Drehachse der Trommel und einer zweiten Stelle an der Innenfläche der Trommel unterscheidet;
einem Heber (14), der an einer Innenfläche der Trommel zum Anheben von Wäsche vorgesehen ist, die in die Trommel aufgenommen ist; und
einem Motor (72), um die Trommel zu drehen,
wobei die Halterung eine vordere Halterung (11), die einen Umfangsabschnitt des vorderen Endes der Trommel (10) hält, und eine hintere Halterung (12) aufweist, die einen Umfangsabschnitt des hinteren Endes der Trommel (10) hält,
wobei die Halterung (11, 12) einen Biegungsabschnitt (11a, 12a) aufweist, der in die Trommel nach innen gebogen ist und mit einem Umfangsabschnitt der Trommel in Kontakt gebracht wird, um die Trommel zu halten, und
**dadurch gekennzeichnet, dass** der Heber (14) verschiebbar mit der vorderen Halterung (11) und der hinteren Halterung (12) verbunden ist, um mit der Trommel (10) gedreht zu werden.

2. Wäschebehandlungsvorrichtung nach Anspruch 1, wobei ein maximaler Abstand zwischen entgegengesetzten Punkten der einfachen geschlossenen Kurve das 1,2-fache eines minimalen Abstands zwischen entgegengesetzten Punkten der einfachen geschlossenen Kurve nicht überschreitet, wenn die Trommel gedreht wird.

3. Wäschebehandlungsvorrichtung nach Anspruch 1, wobei mindestens ein Abschnitt der Trommel mindestens ein gerades Teilstück aufweist.

4. Wäschebehandlungsvorrichtung nach Anspruch 3, wobei mindestens ein gerades Teilstück 10% der gesamten einfachen geschlossenen Kurve nicht überschreitet, wenn die Trommel gedreht wird.

5. Wäschebehandlungsvorrichtung nach Anspruch 1, wobei ein Krümmungsradius auf der linken und rechten Seite der einfachen geschlossenen Kurve unendlich ist und am oberen und unteren Ende der einfachen geschlossenen Kurve minimal wird, wenn die Trommel gedreht wird.

6. Wäschebehandlungsvorrichtung nach Anspruch 5, wobei ein Abschnitt der einfachen geschlossenen Kurve, wo ein Krümmungsradius unendlich ist, 10% der gesamten einfachen geschlossenen Kurve nicht überschreitet, wenn die Trommel gedreht wird.

7. Wäschebehandlungsvorrichtung nach Anspruch 1, wobei die Trommel so gedreht wird, dass die einfache geschlossene Kurve gemäß einer Form des Gehäuses einen maximalen Abstand von der Drehachse aufweist.

8. Wäschebehandlungsvorrichtung nach Anspruch 7, wobei die Trommel so gedreht wird, dass eine vertikale Länge der Trommel größer als eine horizontale Länge der Trommel ist.

## Revendications

1. Machine à traiter le linge, comprenant :
une carrosserie (1) de forme définie ;
un support (11, 12) prévu dans la carrosserie ;
un tambour (10) prévu pour être rotatif et monté sur le support, une partie circonférentielle du tambour étant raccordée de manière coulissante au support, la section transversale du tambour étant une courbe fermée simple, une première distance entre l'axe de rotation du tambour et un premier emplacement sur la surface intérieure du tambour différant d'une deuxième distance entre l'axe de rotation du tambour et un deuxième emplacement sur la surface intérieure du tambour ;
une aube (14) prévue sur la surface intérieure du tambour pour soulever le linge chargé dans le tambour ; et
un moteur (72) destiné à entraîner le tambour en rotation,
où le support comprend un support avant (11) supportant une partie d'extrémité circonférentielle avant du tambour (10) et un support arrière (12) supportant une partie d'extrémité circonférentielle arrière du tambour (10),
où le support (11, 12) présente une partie de cintrage (1 la, 12a) cintrée à l'intérieur du tambour et mise en contact avec une partie circonférentielle du tambour pour supporter le tambour,
**caractérisée en ce que** l'aube (14) est raccordée de manière coulissante au support avant (11) et au support arrière (12) pour être entraînée en rotation avec le tambour (10).

2. Machine à traiter le linge selon la revendication 1, où la distance maximale entre points diamétralement opposés de la courbe fermée simple n'est pas supérieure à 1,2 fois la distance minimale entre points diamétralement opposés de la courbe fermée simple quand le tambour est entraîné en rotation.

3. Machine à traiter le linge selon la revendication 1, où au moins une partie du tambour présente au moins une section rectiligne.

4. Machine à traiter le linge selon la revendication 3, où au moins une section rectiligne ne dépasse pas 10 % de toute la courbe fermée simple quand le tambour est entraîné en rotation.

5. Machine à traiter le linge selon la revendication 1, où le rayon de courbure est infini sur les côtés gauche et droit de la courbe fermée simple et devient minimal aux extrémités supérieure et inférieure de la courbe fermée simple quand le tambour est entraîné en rotation.

6. Machine à traiter le linge selon la revendication 5, où une partie de la courbe fermée simple où le rayon de courbure est infini ne dépasse pas 10 % de toute la courbe fermée simple quand le tambour est entraîné en rotation.

7. Machine à traiter le linge selon la revendication 1, où le tambour est entraîné en rotation de sorte que la courbe fermée simple présente la distance maximale à l'axe de rotation en fonction de la forme de la carrosserie.

8. Machine à traiter le linge selon la revendication 7, où le tambour est entraîné en rotation de sorte que la longueur verticale du tambour est supérieure à la longueur horizontale du tambour.
